# EUROPÄISCHE PATENTSCHRIFT

(11) **EP 2 539 080 B1**
(45) Veröffentlichungstag und Bekanntmachung des Hinweises auf die Patenterteilung: **08.05.2019**
(21) Anmeldenummer: 11706519.3
(22) Anmeldetag: 22.02.2011
(51) Int. Cl.: B27D 5/00, B29C 63/00, B29C 63/48, B29L 7/00

(54) **VERFAHREN ZUM BESCHICHTEN VON BAUTEILEN**
METHOD FOR COATING COMPONENTS
PROCÉDÉ D'APPLICATION DE REVÊTEMENT SUR DES PIÈCES

(30) Priorität: 22.02.2010 DE 102010008821
(43) Veröffentlichungstag der Anmeldung: 02.01.2013
(73) Patentinhaber: HOMAG GmbH, 72296 Schopfloch (DE)
(72) Erfinder: SCHMID, Johannes, 72181 Starzach (DE); REICH, Klaus, 72290 Loßburg (DE); GAUß, Achim, 72280 Dornstetten (DE)
(74) Vertreter: Hoffmann Eitle
(86) Internationale Anmeldenummer: PCT/EP2011/052623
(87) Internationale Veröffentlichungsnummer: WO 2011/101494

(56) Entgegenhaltungen:
- EP-B1- 1 068 026
- WO-A1-2006/117163
- WO-A1-2007/021235
- DE-A1- 19 543 901
- GB-A- 1 516 562
- GB-A- 1 546 518

## Beschreibung

### Technisches Gebiet

Die vorliegende Erfindung bezieht sich auf ein Verfahren zum Beschichten von Bauteilen, insbesondere plattenförmigen oder dreidimensional geformten Bauteilen, die zumindest abschnittsweise aus Holz, Holzwerkstoffen, Kunststoff oder dergleichen bestehen. Obgleich nachfolgend überwiegend Durchlaufverfahren beschrieben werden, bei denen die jeweiligen Werkstücke 10 kontinuierlich oder quasikontinuierlich bewegt werden, kann die vorliegende Erfindung ebenso bei stationären Werkstücken, bei im Stop-and-go bewegten Werkstücken oder Kombinationen hiervon eingesetzt werden.

Unter Beschichtung wird in dieser Anmeldung ein festes Beschichtungsmaterial, wie zum Beispiel eine bandförmige Schmalflächenbeschichtung aus Kunststoff oder Echtholzfurnier (mit begrenzter elastischer Verformbarkeit) verstanden. Im Folgenden wird ein solches Beschichtungsmaterial als Kante bezeichnet.

### Stand der Technik

Besonders im Bereich der Möbelindustrie werden plattenförmige Werkstücke aus verpressten Materialien (z. B. Spanplatten) verarbeitet, die an den geschnittenen Werkstückschmalflächen eine raue oder poröse Oberflächenstruktur aufweisen. Verschiedene Verfahren haben sich im Stand der Technik etabliert, um diese Werkstückschmalflächen zu beschichten. Die bekannten Verfahren haben das gemeinsame Problem, dass die Beschichtung aus Kosten-, Verarbeitungseffizienz- und optischen Gründen dünn sein soll, sich die Unebenheiten der Werkstückschmalfläche aber nicht durch die Beschichtung nach außen hin abzeichnen sollen.

Aus der EP 1 068 026 B1 ist ein Verfahren und System zum Auftragen von Lack bekannt, bei dem eine aufzubringende Lackschicht an das Oberflächenprofil der zu beschichtenden Oberfläche angepasst wird, indem eine angepasste Lackmenge aufgebracht wird. Ferner wird ein System zum Auftragen von Lack auf Werkstückschmalflächen beschrieben, bei der eine Einheit zur Lackdosierung so vorgesehen ist, dass eine Lackschicht zwischen der Einheit zur Lackdosierung und der Walze zum Auftragen von Lack vorgesehen ist.

Bekannte Beschichtungsvorrichtungen zum Aufbringen von Kanten verwenden Klebstoff, der entweder auf die Werkstückschmalfläche oder die Kante aufgetragen wird. Der Begriff Klebstoff wird im Rahmen dieser Anmeldung so allgemein verwendet, dass er sämtliche flüssigen Haftmittel, wie z.B. auch Leim, einschließen soll. Die Kante wird dabei verbreitet als Band von einer Rolle abgewickelt und an die Werkstückschmalfläche angedrückt. Zum Aktivieren des Klebstoffs wird häufig Wärme zugeführt.

Beim Kalt-Aktivierungs-Verfahren wird der Klebstoff bzw. Leim vor der Andruckzone über Wärme emittierende Systeme (Heißluftgebläse, Kontaktwalzen, Infrarotstrahler usw.) aktiviert. Nach der Einstellung der Klebrigkeit wird die Beschichtung auf die eventuell vorgewärmte Schmalfläche gepresst. Auch hierbei wird der Klebstoff entweder auf die Werkstückschmalfläche kurz vor der Aktivierung appliziert oder ist auf dem Beschichtungsmaterial als Vorbeschichtung angebracht.

In der Praxis hat sich gezeigt, dass die Art der Wärmeeinbringung einen großen Einfluss auf das Beschichtungsergebnis hat. Zum Einen soll vermieden werden, dass durch eine zu starke Erwärmung negative Auswirkungen, zum Beispiel physikalische oder chemische Veränderungen am Werkstück, der Beschichtung oder dem Klebstoff auftreten, zum Anderen ist eine ausreichende Wärmeeinbringung für die Aktivierung des Klebstoffs erforderlich.

Der Trend geht ferner dazu, eine Kantenanleimung unter Einsatz von möglichst wenig Klebstoff durchzuführen, da dadurch die Kante sehr dicht an der Werkstückoberfläche anliegen kann und somit von den ebenen Flächen des Werkstücks aus gesehen, die Leimschicht zwischen der geleimten Kante und der Werkstückoberfläche nur wenig sichtbar ist. Gerade für das Verwenden geringer Klebstoffmengen hat sich gezeigt, dass die Art der Wärmeeinbringung einen besonders großen Einfluss auf das Kantenanleimergebnis hat.

Als vorteilhafte Technik für eine besonders gut anpassbare Wärmeeinbringung hat sich die Verwendung eines Lasers zum Energiebeaufschlagen, insbesondere Erwärmen der Werkstückoberfläche bzw. der Kante als vorteilhaft erwiesen. Der Laser wird dabei bahnförmig über die Werkstückoberfläche bzw. die Kante geführt, wodurch die gewünschte Erwärmung erzielbar ist. Über die Laserleistung, Vorschubgeschwindigkeit und Bahnabstand lässt sich die Menge der eingebrachten Wärme flexibel skalieren.

Es hat sich gezeigt, dass gerade beim Aufbringen von flexiblen Kanten mit geringer Materialstärke sich bei Werkstücken mit grob strukturierten Werkstückoberflächen diese Strukturen an den aufgeleimten Kanten abzeichnen, so dass diese dann von außen her sichtbar sind. Dies ist eine ungewünschte Beeinträchtigung des optischen Erscheinungsbildes. Trotzdem besteht der Wunsch, Kanten mit geringer Materialstärke zu verarbeiten, da diese für die erzielbare Optik Vorteile bieten, sie sich gut verarbeiten lassen, kostengünstig sind und somit auch wirtschaftliche Vorteile bieten.

### Darstellung der Erfindung

Es ist daher Aufgabe der vorliegenden Erfindung, ein Verfahren zum Beschichten von Werkstücken zur Verfügung zu stellen, das die genannten Nachteile behebt. Das erfindungsgemäße Verfahren soll ferner die Aufgabe lösen, grob strukturierte Werkstückoberflächen mit Beschichtungen, insbesondere Kanten, die eine geringe Materialstärke aufweisen, unter Einsatz von wenig Klebstoff bzw. Leim kostengünstig bei Erzielung eines guten optischen Erscheinungsbildes zu beschichten.

Erfindungsgemäß wird diese Aufgabe durch ein Verfahren mit den Merkmalen des Patentanspruchs 1 gelöst. In den Unteransprüchen finden sich vorteilhafte Ausgestaltungen und Verbesserungen der Erfindung.

Ein erfindungsgemäßes Verfahren zum Beschichten von bevorzugt plattenförmigen Werkstücken, die bevorzugt zumindest abschnittsweise aus Holz, Holzwerkstoffen, Kunststoff oder dergleichen bestehen, läuft in mehreren Verfahrensschritten ab. Zunächst wird ein Werkstück, das wenigstens eine Werkstückoberfläche aufweist, bereitgestellt. Die Werkstückoberfläche entsteht z.B. als Schnittkante beim Abtrennen des Werkstücks. Diese Werkstückoberfläche soll mittels des erfindungsgemäßen Verfahrens mit einem Beschichtungsmaterial bzw. einer Kante versehen werden. Der Begriff Beschichtungsmaterial bzw. Kante reicht hier weit, beispielsweise von weniger als papierdünnem Material mit z.B. 23 Gramm/Quadratmeter Flächengewicht bis zu Kanten mit einer Materialstärke im Millimeterbereich. Ebenso können Lacke wie beispielsweise Dekorlache als Beschichtungsmaterial zum Einsatz kommen. Beschichtungsmaterialien bzw. Kanten mit einer geringen Materialstärke, die erfindungsgemäß bevorzugt eingesetzt werden, werden verbreitet als Band auf eine Rolle aufgerollt zur Verfügung gestellt.

Die Werkstückoberfläche des bereitgestellten Werkstücks wird veredelt, indem mindestens eine erste aushärtbare Flüssigkeit aufgebracht wird, die in einem nächsten Verfahrensschritt zumindest teilweises ausgehärtet wird. Die Flüssigkeit hat die Aufgabe, auf der Werkstückschmalseite des Werkstücks eine Schicht zu bilden, die die Unebenheiten bzw. Rauhigkeit der Werkstückoberfläche ausgleicht und das Anhaften eines Klebstoffs bzw. Leims für das Anbringen der Kante bzw. ein direktes Anbringen einer Kante ermöglicht. Diese Flüssigkeit ist bevorzugt ein Lack und/oder ein Klebstoff, der eine Verbesserung der Eigenschaften der Werkstückoberfläche, insbesondere durch das Auffüllen von Poren und Unebenheiten bietet. Ferner wird die Oberfläche durch den Lack und/oder Klebstoff verfestigt und für das Anhaften eines Klebstoffs und/oder direkt einer Kante vorbereitet.

Das Verfahren bietet erstmals die Möglichkeit, mit sehr dünnen Beschichtungsmaterialien und Klebstoffschichten zu arbeiten. Dadurch lassen sich mit geringem Einsatz von Material, d.h. Kantenmaterial und Klebstoff ansprechende Beschichtungsresultate besonders wirtschaftlich erzielen. Ermöglicht wird dieses Ergebnis erfindungsgemäß insbesondere durch das Energiebeaufschlagen, insbesondere Erwärmen des Werkstücks und das Aufbereiten der Werkstückoberfläche durch Vorbeschichten und Glätten.

Im nächsten Verfahrensschritt wird eine Vorbehandlung zur Verbesserung der Haftungs- und Benetzungseigenschaften vorgenommen, wobei ein spanendes Abtragen wenigstens eines Teils der flüssigkeitsbeschichteten Werkstückoberfläche erfolgt. Durch die Vorbehandlung, insbesondere das spanende Abtragen (z.B. Abschleifen, Fräsen, Sägen, etc.), wird die Oberflächenbeschaffenheit verbessert. Insbesondere wird die Oberfläche durch das spanende Abtragen (z.B. Abschleifen) glatter und kann ggf. auch formgebend bearbeitet werden. Aufquellungen durch das Aufsaugen der aushärtbaren Flüssigkeit werden abgetragen. Die Haftungs- und Benetzungseigenschaften werden so verbessert.

Zum Ankleben der Kante kommen bevorzugt thermoaktivierbare Klebstoffe zum Einsatz. Daher wird erfindungsgemäß im nächsten Verfahrensschritt vor dem Aufbringen der Kante das Werkstück wenigstens an der Werkstückoberfläche und/oder die Kante erwärmt. Die Kante weist bevorzugt eine Funktionsschicht mit einem thermoaktivierbarem Klebstoff auf. Der Klebstoff wird dann beim Kontakt mit der erwärmten Werkstückoberfläche und/oder direkt aktiviert. Zum Energiebeaufschlagen, insbesondere Erwärmen des Werkstücks und/oder der Kante wird bevorzugt ein Laserstrahl auf die flüssigkeitsbeschichtete Werkstückoberfläche und/oder Kante gerichtet und bahnförmig, insbesondere schleifen- oder mäanderförmig über die flüssigkeitsbeschichtete Werkstückoberfläche geführt. Das beispielsweise schleifen- oder mäanderförmige Führen des Laserstrahls ermöglicht einen besonders homogen über die Fläche verteilten Energieeintrag.

Im nächsten Verfahrensschritt (bzw. ggf. simultan oder sogar in umgekehrter Reihenfolge) wird die Kante auf die flüssigkeitsbeschichtete, erwärmte Werkstückoberfläche aufgebracht und angedrückt. Das Andrücken erfolgt bevorzugt mittels einer Walze, die auf der Kante abrollt und diese gegen die Werkstückoberfläche presst.

Bevorzugt wird die erzielte Oberflächenglätte dadurch verbessert, dass das Abschleifen in mehreren Schritten mit zunehmend feiner Körnung erfolgt. Durch das Schleifen mit zunächst grober Körnung und anschließend feinerer Körnung
kann das Abschleifen schneller durchgeführt werden und eine besonders glatte Oberfläche erzielt werden. Bevorzugt werden dabei gleichzeitig mit einer feineren Körnung Bereiche der flüssigkeitsbeschichteten Werkstückoberfläche abgeschliffen, die schon mit einer gröberen Körnung abgeschliffen wurden, während andere Bereiche der flüssigkeitsbeschichteten Werkstückoberfläche mit der feineren Körnung abgeschliffen werden. Diese Parallelisierung ist bei einem kontinuierlichen Werkstückdurchlauf gut mittels simultan arbeitenden Schleifstationen durchführbar. Die Durchlaufzeit kann dadurch verkürzt werden.

Neben dem Abschleifen kann die Vorbehandlung bevorzugt andere Abtragverfahren aufweisen. Die Vorbehandlung kann ferner bevorzugt ein Vorreinigen, Entfetten, Verbessern der Haftungs- und Benetzungseigenschaften und Vermindern der elektrostatischen Aufladung einschließen.

Gemäß einer bevorzugten Weiterbildung der vorliegenden Erfindung wird vor dem Verfahrensschritt des Aufbringens der Kante ein Verfahrensschritt des Aufbringens von Klebstoff auf die flüssigkeitsbeschichtete Werkstückoberfläche und/oder Kante vorgesehen. Durch das Aufbringen von Klebstoff kann eine Kante ohne eigene klebende Funktionsschicht verwendet werden oder die klebende Funktionsschicht in ihrer klebenden Wirkung verstärkt werden. Eine klebende Funktionsschicht der Kante kann dabei auch bevorzugt mit dem aufgebrachten Klebstoff in Form eines Mehrkomponentenklebstoffes reagieren.

Durch das Vorbehandeln der Werkstückoberfläche ist es möglich, dass der Klebstoff bevorzugt mit einer geringen Menge von nur 25-30 Gramm pro Quadratmeter Werkstückoberfläche aufgetragen wird. Die geringe Klebstoffmenge ermöglicht ein besonders enges und ebenes Anliegen der Kante an der flüssigkeitsbeschichteten Werkstückoberfläche.

Gemäß einer bevorzugten Weiterbildung der vorliegenden Erfindung weist die aufgebrachte Kante eine Klebeschicht auf, die durch Wärmeeinbringung aktivierbar ist. Dazu wird bevorzugt vor dem Aufbringen der Kante Energie, insbesondere durch wenigstens einen Laserstrahl, in die Kante bzw. die Klebeschicht eingebracht, um die Aktivierung des Klebstoffs durchzuführen. Bevorzugt kann das einbringen von Energie in die Kante auch durch eine Energiequelle erfolgen, die ausgewählt ist aus der Gruppe bestehend aus: Laser, Infrarotquelle, Ultraschallquelle, Magnetfeldquelle, Mikrowellenquelle, Plasmaquelle, und Begasungsquelle.

Gemäß einer bevorzugten Ausführungsform der vorliegenden Erfindung wird vor dem Abschleifen eine zweite aushärtbare Flüssigkeit auf die flüssigkeitsbeschichtete Werkstückoberfläche aufgebracht und zum Aushärten gebracht. Die erste aushärtbare Flüssigkeit ist kostengünstig, erreicht aber ausgehärtet nicht die Oberflächenqualität der zweiten Flüssigkeit. Daher wird die zweite Flüssigkeitsschicht aufgebracht, die, wenigstens teilweise ausgehärtet, die erforderliche Oberflächenqualität erreicht, jedoch teurer ist. Durch den zweischichtigen Aufbau mittels der ersten Flüssigkeit und der zweiten Flüssigkeit kann die erforderliche Oberflächenqualität im notwendigen Kostenrahmen erzielt werden.

Gemäß einer Weiterbildung der Erfindung ist ferner vorgesehen, dass die zumindest teilweise ausgehärtete erste Flüssigkeit durch Erwärmung zumindest teilweise aktiviert wird, und dass die Beschichtung mittels der aktivierten ersten Flüssigkeit mit der ersten Schmalfläche verbunden wird. Auf diese Weise wird es möglich, der aufgebrachten ersten Flüssigkeit eine Doppelfunktion zuzuweisen. Einerseits dient die aushärtbare erste Flüssigkeit dazu, die poröse und unebene Schmalfläche des Werkstücks zu egalisieren und zu verfestigen, andererseits kann die bereits teilweise ausgehärtete erste Flüssigkeit durch Erwärmung (mittels einer beliebigen Energiequelle) aktiviert werden, sodass sie klebende Eigenschaften entfaltet und für eine Verwendung der Beschichtung mit der Schmalfläche sorgen kann. Dabei ist von besonderem Vorteil, dass sich eine besonders dünne und kaum sichtbare Fuge zwischen Beschichtung und Werkstück ergibt, was nicht nur für eine zuverlässige Verbindung, sondern auch für ein ansprechendes Erscheinungsbild des hergestellten Werkstücks sorgt.

Gemäß einer bevorzugten Ausführungsform der vorliegenden Erfindung erfolgt das Andrücken der Kante durch eine beheizte Walze. Dadurch kann die zum Aktivieren des Klebstoffs erforderliche Wärme oder wenigstens ein Teil davon über die Kante auf den Klebstoff abgegeben werden. Der Energieeintrag erfolgt dabei auch in unmittelbarer Nähe zur Andrückstelle, d.h. dort, wo die maximale Andrückkraft zwischen Kante und Werkstück anliegt. Dadurch ist eine besonders effiziente Energieeinbringung möglich.

Mit dem erfindungsgemäßen Verfahren lassen sich bevorzugt auch Kanten mit einem Flächengewicht von weniger als 25 Gramm pro Quadratmeter Kantenfläche verarbeiten. Die besondere erfindungsgemäße Glättung der Werkstückoberfläche mit dem geringen nachfolgend notwendigen Klebstoffauftrag zur Kantenanbringung macht es möglich, dass sich auch bei solch dünnen Kanten keine Unebenheiten auf der Sichtfläche abzeichnen.

Die obigen und andere Aufgaben und Merkmale und Vorteile der vorliegenden Erfindung werden für den Fachmann aus der folgende detaillierten Beschreibung von bevorzugten Ausführungsformen der vorliegende Erfindung, die in Verbindung mit den begleitenden Zeichnungen vorgenommen sind, einfacher verständlich. In den Figuren werden dieselben oder entsprechende Elemente mit denselben Bezugszeichen bezeichnet. Die Erfindung ist nicht auf die im Folgenden beschriebenen Ausführungsformen beschränkt.

### Kurze Beschreibung der Zeichnungen

- Fig. 1: ist eine schematische Draufsicht des Ablaufs des erfindungsgemäßen Verfahrens zum Beschichten von bevorzugt plattenförmigen Werkstücken auf einer entsprechenden Anlage gemäß einem ersten Ausführungsbeispiel; und
- Fig. 2: ist eine schematische Draufsicht des Ablaufs des erfindungsgemäßen Verfahrens zum Beschichten von bevorzugt plattenförmigen Werkstücken auf einer entsprechenden Anlage gemäß einem zweiten Ausführungsbeispiel.
- Fig. 3: ist eine schematische Draufsicht des Ablaufs des erfindungsgemäßen Verfahrens zum Beschichten von bevorzugt plattenförmigen Werkstücken auf einer entsprechenden Anlage gemäß einem dritten Ausführungsbeispiel.

### Ausführliche Beschreibung von bevorzugten Ausführungsformen

Bevorzugte Ausführungsformen der Erfindung werden nachfolgend ausführlich unter Bezugnahme auf die begleitenden Zeichnungen beschrieben. Das erfindungsgemäße Verfahren dient primär zum Beschichten von bevorzugt plattenförmigen Werkstücken, die beispielsweise zumindest abschnittsweise aus Holz, Holzwerkstoffen, Kunststoff oder dergleichen bestehen, obgleich die vorliegende Erfindung nicht hierauf beschränkt ist.

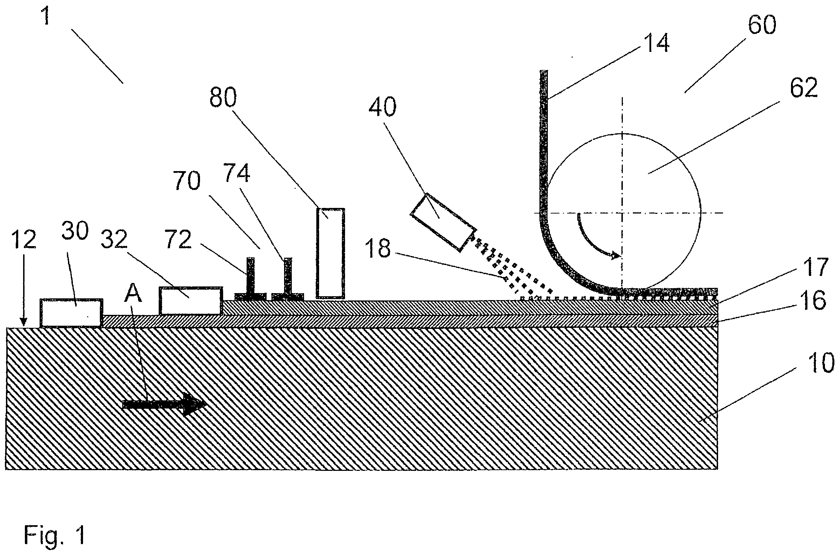

Fig. 1 ist eine schematische Draufsicht des Ablaufs des erfindungsgemäßen Verfahrens zum Beschichten von bevorzugt plattenförmigen Werkstücken 10 auf einer entsprechenden Anlage 1 gemäß einem ersten Ausführungsbeispiel.

Ein plattenförmiges Werkstück 10 wird in der Pfeilrichtung A einer Anlage 1 zum Beschichten von plattenförmigen Werkstücken 10 zugeführt. Das Werkstück 10 weist an der im Bild oben dargestellten Seite eine Werkstückoberfläche 12 auf. Die Werkstückoberfläche 12 weist im vorliegenden Ausführungsbeispiel eine eher poröse Schnittflächengrundstruktur auf, die veredelt und mit einer Kante 14 versehen werden soll.

Die Bearbeitungsfolge der Werkstückoberfläche 12 ist im Bild von links nach rechts fortlaufend dargestellt. Zum besseren Verständnis sind die Verfahrensschritte des Veredelns der Werkstückoberfläche 12 ebenfalls dargestellt. Zunächst wird zum Veredeln mit einer als Rechteck dargestellten ersten Flüssigkeitsbeschichtungseinrichtung 30 eine erste aushärtbare Flüssigkeit 16 auf die Werkstückoberfläche 12 aufgebracht. Bei der ersten aushärtbaren Flüssigkeit 16 kann es sich prinzipiell um jede Art von aushärtbarer Flüssigkeit handeln, beispielsweise auch um Lack oder dergleichen, wobei die Flüssigkeiten auch zähflüssig im Sinne einer aushärtbaren Masse sein können. "Flüssig" ist insoweit als Aggregatszustand und somit Abgrenzung zu "fest" oder "gasförmig" zu verstehen.

Bevorzugt kommt jedoch im Rahmen der vorliegenden Erfindung ein Klebstoff zum Einsatz, beispielsweise ein Schmelzklebstoff. Durch den Klebstoff werden nicht nur mögliche Poren oder sonstige Gefügeschwachstellen in dem Werkstück gefüllt, sondern es werden auch die einzelnen Elemente bzw. Partikel der offenen Werkstückfläche miteinander verklebt, sodass das Werkstück insgesamt stabilisiert wird. Als Flüssigkeitsbeschichtungseinrichtung 30 kommen im Rahmen der Erfindung unterschiedlichste Konstruktionen infrage, wie beispielsweise Walze, Düse, Spachtel, etc. sowie Kombinationen hiervon.

Die auf die Werkstückoberfläche 12 aufgetragene erste aushärtbare Flüssigkeit 16 ist im Bild als schraffierte Schicht entlang der Werkstückoberfläche 12 dargestellt. Dabei ist zu beachten, dass die erste aushärtbare Flüssigkeit 16 je nach Beschaffenheit (z.B. Porosität) der Werkstückoberfläche 12 in diese eindringt und ggf. nur noch geringfügig oder - abweichend von der beispielhaften Darstellung in den Fig. 1 bis 3 - gar nicht über die Werkstückoberfläche 12 hervorsteht.

Nach einem zumindest teilweisen Aushärten der ersten Flüssigkeit 16 ist die Veredelung der Werkstückoberfläche 12 abgeschlossen, und es wird bei dieser Ausführungsform auf die mit der ersten aushärtbaren Flüssigkeit 16 flüssigkeitsbeschichtete Werkstückoberfläche 12 des Werkstücks 10 eine zweite aushärtbare Flüssigkeit 17 aufgetragen. Dazu kommt eine zweite Flüssigkeitsbeschichtungseinrichtung 32 zum Einsatz. Es entsteht somit ein Schichtaufbau aus Werkstück 10, Schicht 16 der ersten aushärtbaren Flüssigkeit und Schicht 17 der zweiten aushärtbaren Flüssigkeit.

Im Nachfolgenden, im Bild weiter rechts dargestellten Arbeitsschritt, erfolgt ein Abschleifen der flüssigkeitbeschichteten Werkstückoberfläche 12, das heißt die Schicht 17 aus der zweiten aushärtbaren Flüssigkeit wird abgeschliffen. Bei dieser Ausführungsform erfolgt das Abschleifen stufenweise mittels einer Schleifeinrichtung 70, die eine erste Schleifstation 72 und eine zweite Schleifstation 74 aufweist. Die erste Schleifstation 72 und die zweite Schleifstation 74 arbeiten parallel. Dabei verwendet die erste Schleifstation 72 eine gröbere Körnung als die zweite Schleifstation 74. Dabei sind die beiden Schleifstationen 72, 74 so sequentiell bezüglich der Vorschubrichtung A des Werkstücks 10 angeordnet, dass die zweite Schleifstation 74 mit der feineren Körnung die Bereiche der flüssigkeitsbeschichteten Werkstückoberfläche 12 abschleift, die vorher von der ersten Schleifstation 72 unter Verwendung der gröberen Körnung abgeschliffen wurde.

Die somit zweifach flüssigkeitsbeschichtete und abgeschliffene Werkstückoberfläche 12 wird dann in der vorliegenden Ausführungsform mittels einer Energiequelle 80 erwärmt, wobei auch ohne Erwärmung des Werkstücks gearbeitet werden kann. Bei dieser Ausführungsform ist die Energiequelle 80 als Infrarotstrahleranordnung ausgeführt. Die Energiequelle 80 kann alternativ oder zusätzlich auch dazu ausgelegt sein, die Oberflächeneigenschaften des Werkstücks zu verbessern, beispielsweise die Oberflächenspannung zu vermindern.

Wie weiter rechts im Bild dargestellt ist, erfolgt anschließend ein Auftrag von Klebstoff 18 auf die flüssigkeitsbeschichtete Werkstückoberfläche 12. Der Klebstoff wird mittels einer Klebstoffaufbringungseinrichtung 40 aufgetragen. Nachfolgend wird eine flexible Kante 14 auf die mit der ersten aushärtbaren Flüssigkeit 16, der zweiten aushärtbaren Flüssigkeit 17 und dem Klebstoff 18 beschichtete Werkstückoberfläche 12 aufgebracht und mittels einer Walze 62 einer Kantenaufbring- und Andrückeinrichtung 60 angedrückt.

Zunächst ist die Werkstückoberfläche 12 für das direkte Beschichten mit der flexiblen Kante 14 die aus wirtschaftlichen und optischen Gründen sehr dünn ist, nicht geeignet, da die Werkstückoberfläche 12 eine zu ungleichmäßige und poröse Oberflächenstruktur aufweist. Unebenheiten der Werkstückoberfläche 12 würden sich in der aufgeklebten bzw. aufgeleimten Kante 14 oberflächenseitig abzeichnen. Daher erfolgt die Beschichtung mit der ersten aushärtbaren Flüssigkeit 16 und bei diesem Ausführungsbeispiel auch mit der zweiten aushärtbaren Flüssigkeit 17. Die erste aushärtbare Flüssigkeit 16 ist kostengünstig, erreicht aber ausgehärtet ggf. nur eine mittlere Oberflächenqualität. Daher wird in der vorliegenden Ausführungsform die zweite Flüssigkeitsschicht 17 aufgebracht, die eine bessere Oberflächenqualität als die erste Flüssigkeitsschicht 16 erreicht, jedoch teurer ist. Durch den zweischichtigen Aufbau mittels der ersten Flüssigkeit 16 und der zweiten Flüssigkeit 17 kann die erforderliche Oberflächenqualität im notwendigen Kostenrahmen erzielt werden.

Die Schleifeinrichtung 70 verbessert die Oberflächenqualität weiter. Dabei werden mittels der ersten Schleifstation 72 die groben Unebenheiten von der flüssigkeitsbeschichteten Werkstückoberfläche 12 schnell abgetragen. Um die flüssigkeitsbeschichtete Werkstückoberfläche 12 weiter zu glätten, erfolgt das Abschleifen mittels der zweiten Schleifstation 74, die eine feinere Körnung verwendet und daher eine glattere Oberflächenbeschaffenheit erzielen kann. Da bei diesem Ausführungsbeispiel zum Ankleben der Kante 14 auf die flüssigkeitsbeschichtete Werkstückoberfläche 12 ein temperaturaktivierbarer Kleber 18 verwendet wird, erfolgt bevorzugt als nächstes das Aufheizen der flüssigkeitsbeschichteten Werkstückoberfläche 12 mittels eines Infrarotstrahlers 80 als Energiequelle.

Anschließend - oder ggf. auch simultan und/oder vorher - wird der Klebstoff 18 mittels der Klebstoffaufbringungseinrichtung 40 auf die flüssigkeitsbeschichtete Werkstückoberfläche 12 aufgetragen. Anschließend wird die Kante 14 mittels der Walze 62 auf die flüssigkeitsbeschichtete Werkstückoberfläche 12 mit dem aufgetragenen Klebstoff 18 aufgebracht und angedrückt. Damit ist der Beschichtungsvorgang abgeschlossen.

Das erfindungsgemäße Verfahren ermöglicht es, auch sehr dünnes Kantenmaterial, z. B. von 23 g/m² Kantenmaterialfläche auf vor der Bearbeitung raue Werkstückoberflächen 12 aufzutragen. Die Werkstückoberfläche 12 wird dazu in der vorliegenden Ausführungsform sukzessive mit einer ersten aushärtbaren Flüssigkeit 16 und einer zweiten aushärtbaren Flüssigkeit 17 versehen. Die erste aushärtbare Flüssigkeit 16 wird dazu dicker aufgetragen, ist kostengünstig, erreicht jedoch ausgehärtet nur eine begrenzte Oberflächenqualität. Daher wird bei diesem Ausführungsbeispiel eine zweite aushärtbare Flüssigkeit 17 aufgetragen, die teurer als die erste aushärtbare Flüssigkeit 16 ist, jedoch für das Kantenaufleimen wenigstens teilweise ausgehärtet eine bessere Oberflächenqualität erreicht.

Die so zweifachflüssigkeitsbeschichtete Werkstückoberfläche 12 wird anschließend abgeschliffen. Der Einsatz von einer ersten Schleifstation 72 mit grober Körnung und einer zweiten Schleifstation 74 mit feinerer Körnung ermöglicht es, die zweifachflüssigkeitsbeschichtete Werkstückoberfläche 12 schnell glatt zu schleifen und trotzdem die für das Aufbringen der Kante 14 erforderliche hohe Oberflächenqualität zu erreichen. Das anschließende Energiebeaufschlagen, insbesondere Erwärmen der zweifachflüssigkeitsbeschichteten Werkstückoberfläche 12 ermöglicht den Einsatz von thermoaktivierbaren Klebstoff 18. Da das Kantenmaterial selber sehr dünn ist und daher eine geringe Wärmespeicherkapazität aufweist, wird bei dieser Ausführungsform vorteilhaft die flüssigkeitsbeschichtete Werkstückoberfläche 12 erwärmt, da diese die Wärme besser speichern kann. Mit dem erfindungsgemäßen Verfahren lassen sich auch sehr dünne Kanten 14 unter Erzielung einer hohen Oberflächenqualität kostengünstig aufkleben.

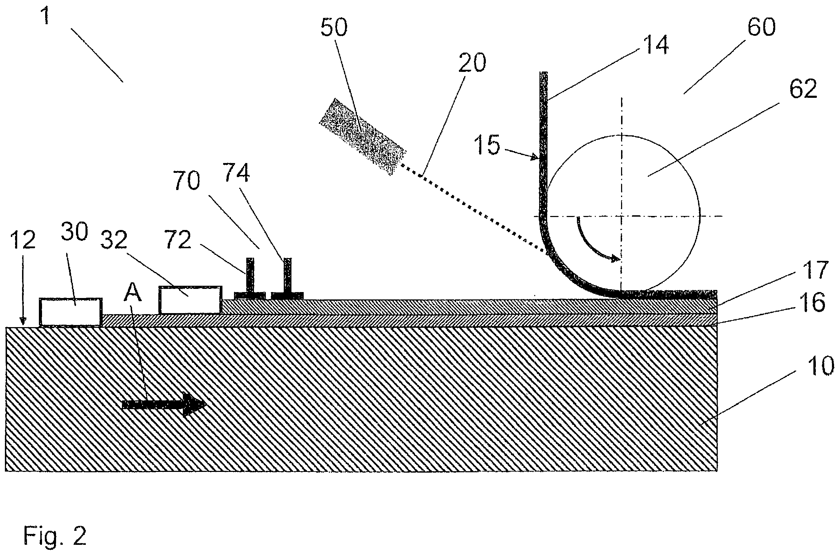

Fig. 2 ist eine schematische Draufsicht des Ablaufs des erfindungsgemäßen Verfahrens zum Beschichten von bevorzugt plattenförmigen Werkstücken auf einer entsprechenden Anlage gemäß einem zweiten Ausführungsbeispiel. In wesentlichen Teilen entsprechen die in Fig. 2 dargestellten Elemente denen von Fig. 1. Es wird daher auf Fig. 1 verwiesen, und es werden im Folgenden lediglich die Besonderheiten des Ausführungsbeispiels gemäß Fig. 2 gegenüber dem aus Fig. 1 dargelegt. Gemäß diesem Ausführungsbeispiel kommt eine Kante 14 zum Einsatz, die mit einer Funktionsschicht 15 versehen ist, die bei thermischer Aktivierung klebt. Zur thermischen Aktivierung ist ein Laser 50 vorgesehen mit dem die Kante 14 bestrahlt wird. Durch Andrücken der durch den Laserstrahl 20 erwärmten Kante 14 mit ihrer Funktionsschicht 15 gegen die flüssigkeitsbeschichtete Werkstückoberfläche 12 erfolgt die Verklebung der Kante 14 mit der flüssigkeitsbeschichteten Werkstückoberfläche 12. Daher ist bei diesem Ausführungsbeispiel die Klebstoffaufbringungseinrichtung 40 zum Aufbringen des Klebstoffs 18 nicht vorgesehen und der Klebstoffauftrag als Verfahrensschritt entfällt.

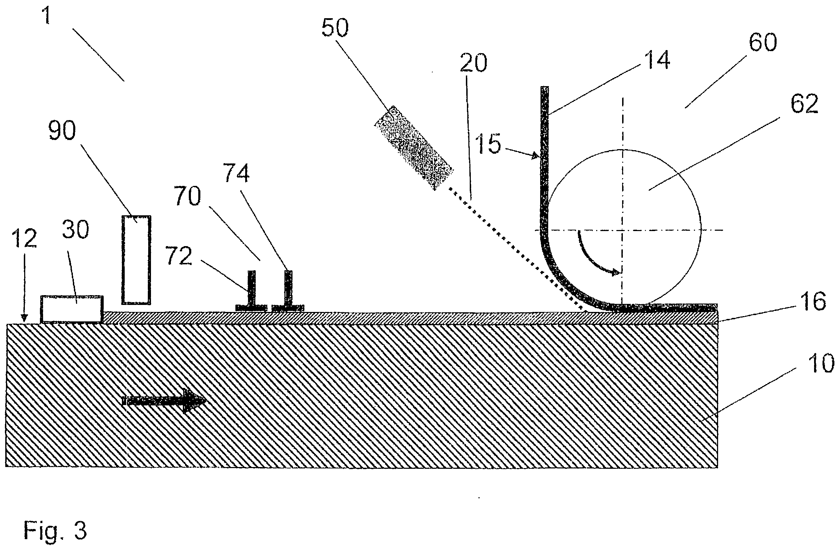

Eine weitere bevorzugte Ausführungsform des erfindungsgemäßen Verfahrens bzw. der erfindungsgemäßen Vorrichtung ist in Fig. 3 schematisch in einer Draufsicht dargestellt. Diese knüpft wiederum an der in Fig. 1 gezeigten ersten Ausführungsform an, unterscheidet sich von dieser jedoch zunächst dadurch, dass die mittels der ersten Flüssigkeitsbeschichtungseinrichtung 30 aufgebrachte erste aushärtbare Flüssigkeit bzw. der aufgebrachte Klebstoff 16 mittels einer UV-Strahlungsquelle oder einer anderen geeigneten Energiequelle zumindest teilweise ausgehärtet wird. Anschließend wird die zumindest teilweise ausgehärtete Klebstoffschicht 16 mittels der Schleifstationen 72 und 74 bearbeitet, wobei im Zuge dieser Bearbeitung auch eine Formatbearbeitung bzw. Formgebung der Schmalfläche 12 stattfinden kann.

Anschließend wird die Klebstoffschicht 16 unmittelbar vor dem Aufbringen der Beschichtung 14 mittels der Energiequelle 50, die in der vorliegenden Ausführungsform als Laserbestrahlungseinrichtung ausgebildet ist, mit Energie beaufschlagt, sodass die Klebstoffschicht 16 aktiviert wird, d.h. zumindest teilweise klebende Eigenschaften entfaltet. Unmittelbar danach wird die Beschichtung bzw. Kante 14 mittels der Andruckwalze 62 an die aktivierte Klebstoffschicht 16 angedrückt und so mit der Schmalfläche 12 des Werkstücks 10 verbunden.

Obgleich in den Figuren nicht gezeigt, kann anstelle eines Kantenmaterials auch eine sonstige Beschichtung auf das Werkstück aufgebracht werden, beispielsweise in Form eines Lacks oder einer sonstigen Deckschicht.

### Bezugszeichenliste

- 1: Anlage zum Beschichten
- 10: Werkstück
- 12: Werkstückoberfläche
- 14: Kante
- 15: Funktionsschicht
- 16: erste aushärtbare Flüssigkeit
- 17: zweite aushärtbare Flüssigkeit
- 18: Klebstoff
- 20: Energiequelle
- 30: erste Flüssigbeschichtungseinrichtung
- 32: zweite Flüssigbeschichtungseinrichtung
- 40: Klebstoffaufbringungseinrichtung
- 50: Laserbestrahlungseinrichtung
- 60: Kantenaufbring- und Andrückeinrichtung
- 62: Walze
- 70: Schleifeinrichtung
- 72: erste Schleifstation
- 74: zweite Schleifstation
- 80: Energiequelle
- 90: Energiequelle
- A: Vorschubrichtung

## Patentansprüche

1. Verfahren zum Beschichten von bevorzugt plattenförmigen Werkstücken (10), die bevorzugt zumindest abschnittsweise aus Holz, Holzwerkstoffen, Kunststoff oder dergleichen bestehen, mit folgenden Verfahrensschritten:
(a) Bereitstellen von einem Werkstück (10) mit wenigstens einer Werkstückoberfläche (12), insbesondere Werkstückschmalfläche, bei dem die Werkstückoberfläche (12) durch Aufbringen mindestens einer ersten aushärtbaren Flüssigkeit (16) auf die Werkstückoberfläche (12) und zumindest teilweises Aushärten der ersten Flüssigkeit (16) veredelt wird;
(s) Vorbehandlung zur Verbesserung der Haftungs- und Benetzungseigenschaften durch spanendes Abtragen wenigstens eines Teils der flüssigkeitsbeschichteten Werkstückoberfläche (12);
(b) Errwärmen des Werkstücks (10) wenigstens an der Werkstückoberfläche (12) durch Energiebeaufschlager und
(c) Aufbringen einer Beschichtung (14), wobei die Beschichtung ein festes Beschichtungsmaterial ist, insbesondere eine Kante (14) auf die flüssigkeitsbeschichtete, erwärmte Werkstückoberfläche (12) und bevorzugt Andrücken der Kante (14) an die flüssigkeitsbeschichtete Werkstückoberfläche (12).

2. Verfahren nach Anspruch 1,
**dadurch gekennzeichnet,**
**dass** die aushärtbare Flüssigkeit ein Klebstoff, insbesondere ein durch Energieeintrag aktivierbarer Klebstoff, ist.

3. Verfahren nach Anspruch 1 oder 2,
**dadurch gekennzeichnet,**
**dass** die aushärtbare Flüssigkeit durch Energieeintrag (90) zumindest teilweise ausgehärtet wird, insbesondere durch UV-Strahlung.

4. Verfahren nach Anspruch 1,
**dadurch gekennzeichnet,**
**dass** das Abtragen in Form eines Abschleifens im Verfahrensschritt (s) in mehreren Schritten mit zunehmend feiner Körnung und/oder formgebend erfolgt.

5. Verfahren nach Anspruch 4,
**dadurch gekennzeichnet,**
**dass** im Verfahrensschritt (s) gleichzeitig mit einer feineren Körnung Bereiche der flüssigkeitsbeschichteten Werkstückoberfläche (12), abgeschliffen werden, die schon mit einer gröberen Körnung abgeschliffen wurden, während andere Bereiche der flüssigkeitsbeschichteten Werkstückoberfläche (12) mit der feineren Körnung abgeschliffen werden.

6. Verfahren nach einem der vorhergehenden Ansprüche,
**dadurch gekennzeichnet,**
**dass** vor dem Verfahrensschritt (c) des Aufbringens der Beschichtung (14) ein Verfahrensschritt (t) des Aufbringens von Klebstoff (18) auf die flüssigkeitsbeschichtete Werkstückoberfläche (12) und/oder Beschichtung (14) erfolgt.

7. Verfahren nach Anspruch 6,
**dadurch gekennzeichnet,**
**dass** der Klebstoff (18) mit einer Menge von 25-30 Gramm pro Quadratmeter Werkstückoberfläche (12) aufgetragen wird.

8. Verfahren nach einem der vorhergehenden Ansprüche,
**dadurch gekennzeichnet,**
**dass** die im Verfahrensschritt (c) aufgebrachte Beschichtung (14) eine Klebeschicht (15) aufweist, die durch Wärmeeinbringung aktivierbar ist.

9. Verfahren nach Anspruch 8,
**dadurch gekennzeichnet,**
**dass** vor dem Verfahrensschritt (c) ein Verfahrensschritt (V) von einem Einbringen von Energie in die Beschichtung (14) bzw. eine Klebeschicht (15, 16), insbesondere durch eine Energiequelle (20) erfolgt, die bevorzugt ausgewählt ist aus der Gruppe bestehend aus: Laser, Infrarotquelle, Ultraschallquelle, Magnetfeldquelle, Mikrowellenquelle, Plasmaquelle, und Begasungsquelle.

10. Verfahren nach einem der vorhergehenden Ansprüche,
**dadurch gekennzeichnet**,
die zumindest teilweise ausgehärtete erste Flüssigkeit (16) durch Erwärmung zumindest teilweise aktiviert wird, und dass die Beschichtung (14) mittels der aktivierten ersten Flüssigkeit (16) mit der Werkstückoberfläche (12), insbesondere der Schmalfläche (12) verbunden wird.

11. Verfahren nach einem der vorhergehenden Ansprüche,
**dadurch gekennzeichnet,**
**dass** das Energiebeaufschlagen, insbesondere Erwärmen des Werkstücks (10) und/oder der Beschichtung im Verfahrensschritt (b) durch eine Energiequelle (80) erfolgt, die bevorzugt ausgewählt ist aus der Gruppe bestehend aus: Laser, Infrarotquelle, Ultraschallquelle, Magnetfeldquelle, Mikrowellenquelle, Plasmaquelle, und Begasungsquelle.

12. Verfahren nach einem der vorhergehenden Ansprüche,
**dadurch gekennzeichnet,**
**dass** im Verfahrensschritt (c) das Andrücken der Beschichtung (16) durch eine beheizte Walze (62) erfolgt.

13. Verfahren nach einem der vorhergehenden Ansprüche,
**dadurch gekennzeichnet,**
**dass** im Verfahrensschritt (c) die Beschichtung (14) ein Flächengewicht von weniger als 25 Gramm pro Quadratmeter Kantenfläche aufweist.

## Claims

1. Method for coating preferably panel-formed workpieces (10) which preferably consist at least in sections of wood, wood materials, plastics or the like, comprising the following method steps:
(a) providing a workpiece (10) with at least one workpiece surface (12), in particular a narrow workpiece surface, wherein the workpiece surface (12) is processed by applying at least a first curable liquid (16) to the workpiece surface (12) and at least partially curing the first liquid (16);
(s) pre-treatment to improve the adhesive and wetting properties by removing, through machining, at least a part of the liquid-coated workpiece surface (12);
(b) heating the workpiece (10), at least on the workpiece surface (12), through the application of energy, and
(c) applying a lamination (14), wherein the lamination is a solid lamination material, in particular an edge (14), to the liquid-coated, heated workpiece surface (12) and preferably pressing the edge (14) onto the liquid-coated workpiece surface (12).

2. Method according to claim 1,
**characterised in that**
the curable liquid is an adhesive, in particular an adhesive activatable through the input of energy.

3. Method according to claim 1 or 2,
**characterised in that**
the curable liquid is at least partially cured through the input of energy (90), in particular through UV radiation.

4. Method according to claim 1,
**characterised in that**
the removal in the form of grinding in the method step (s) takes place in several steps with increasingly finer grain and/or in a shaping manner.

5. Method according to claim 4,
**characterised in that**
in the method step (s) regions of the liquid-coated workpiece surface (12) which have already been ground with a coarser grain are simultaneously ground with a finer grain while other regions of the liquid-coated workpiece surface (12) are ground with the finer grain.

6. Method according to one of the preceding claims,
**characterised in that**
a method step (t) of applying adhesive (18) to the liquid-coated workpiece surface (12) and/or lamination (14) takes place before the method step (c) of applying the lamination (14).

7. Method according to claim 6,
**characterised in that**
the adhesive (18) is applied in a quantity of 25-30 grams per square metre of workpiece surface (12).

8. Method according to one of the preceding claims,
**characterised in that**
the lamination (14) applied in the method step (c) has an adhesive layer (15) which is activated through the input of heat.

9. Method according to claim 8,
**characterised in that**
before the method step (c) a method step (V) of inputting energy into the lamination (14) or an adhesive layer (15, 16) takes place, in particular through an energy source (20) which is preferably selected from the group consisting of: laser, infrared source, ultrasound source, magnetic field source, microwave source, plasma source, and gassing source.

10. Method according to one of the preceding claims,
**characterised in that**
the at least partially cured first liquid (16) is at least partially activated through heating, and that the lamination (14) is connected with the workpiece surface (12), in particular the narrow surface (12), by means of the activated first liquid (16).

11. Method according to one of the preceding claims,
**characterised in that**
the input of energy, in particular the heating of the workpiece (10) and/or the lamination in the method step (b) is effected through an energy source (80) which is preferably selected from the group consisting of: laser, infrared source, ultrasound source, magnetic field source, microwave source, plasma source, and gassing source.

12. Method according to one of the preceding claims,
**characterised in that**
in the method step (c) the pressing of the lamination (16) takes place through a heated roller (62).

13. Method according to one of the preceding claims,
**characterised in that**
in the method step (c) the lamination (14) has a weight per unit area of less than 25 grams per square metre of edge surface.

## Revendications

1. Procédé de revêtement de pièces à usiner (10) de préférence en forme de plaque qui se composent de préférence au moins par section de bois, matériaux dérivés du bois, matière plastique ou similaires, avec les étapes de procédé suivantes :
(a) mise à disposition d'une pièce à usiner (10) avec au moins une surface de pièce à usiner (12), en particulier une surface étroite de pièce à usiner, pour laquelle la surface de pièce à usiner (12) est apprêtée par application d'au moins un premier liquide durcissable (16) sur la surface de pièce à usiner (12) et durcissement au moins partiel du premier liquide (16) ;
(s) prétraitement pour l'amélioration des propriétés d'adhérence et d'humidification par élimination de copeaux d'au moins une partie de la surface de pièce à usiner (12) revêtue de liquide ;
(b) chauffage de la pièce à usiner (10) au moins sur la surface de pièce à usiner (12) par l'alimentation en énergie, et
(c) application d'un revêtement (14), dans lequel le revêtement est un matériau de revêtement fixe, en particulier une arête (14), sur la surface de pièce à usiner (12) chauffée, revêtue de liquide et de préférence pressage de l'arête (14) contre la surface de pièce à usiner (12) revêtue de liquide.

2. Procédé selon la revendication 1, **caractérisé en ce**
**que** le liquide durcissable est une colle, en particulier une colle activable par apport d'énergie.

3. Procédé selon la revendication 1 ou 2, **caractérisé en ce**
**que** le liquide durcissable est durci par apport d'énergie (90) au moins partiellement, en particulier par rayonnement UV.

4. Procédé selon la revendication 1, **caractérisé en ce**
**que** l'enlèvement est effectué sous la forme d'un ponçage dans l'étape de procédé (s) en plusieurs étapes avec une taille de grains de plus en plus fine et/ou par façonnage.

5. Procédé selon la revendication 4, **caractérisé en ce**
**que** dans l'étape de procédé (s) simultanément avec une taille de grains plus fine des zones de la surface de pièce à usiner (12) revêtue de liquide sont poncées, lesquelles ont déjà été poncées avec une taille de grains plus grossière, alors que d'autres zones de la surface de pièce à usiner (12) revêtue de liquide sont poncées avec la taille de grains plus fine.

6. Procédé selon l'une quelconque des revendications précédentes, **caractérisé en ce**
**qu'**avant l'étape de procédé (c) de l'application du revêtement (14) une étape de procédé (t) de l'application de colle (18) sur la surface de pièce à usiner (12) revêtue de liquide et/ou revêtement (14) est effectuée.

7. Procédé selon la revendication 6, **caractérisé en ce**
**que** la colle (18) est appliquée avec une quantité de 25-30 grammes par mètre carré de surface de pièce à usiner (12).

8. Procédé selon l'une quelconque des revendications précédentes, **caractérisé en ce**
**que** le revêtement (14) appliqué dans l'étape de procédé (c) présente une couche de colle (15) qui est activable par introduction de chaleur.

9. Procédé selon la revendication 8, **caractérisé en ce**
**qu'**avant l'étape de procédé (c) une étape de procédé (V) est effectuée par une introduction d'énergie dans le revêtement (14) ou une couche de colle (15, 16), en particulier par une source d'énergie (20) qui est sélectionnée de préférence dans le groupe composé de : laser, source infrarouge, source d'ultrasons, source de champ magnétique, source de microonde, source de plasma, et source de gazage.

10. Procédé selon l'une quelconque des revendications précédentes, **caractérisé en ce**
**que** le premier liquide (16) durci au moins partiellement est activé au moins partiellement par chauffage, et que le revêtement (14) est relié au moyen du premier liquide (16) activé avec la surface de pièce à usiner (12), en particulier la surface étroite (12).

11. Procédé selon l'une quelconque des revendications précédentes, **caractérisé en ce**
**que** l'alimentation en énergie, en particulier le chauffage de la pièce à usiner (10) et/ou le revêtement est effectué dans l'étape de procédé (b) par une source d'énergie (80) qui est sélectionnée de préférence dans le groupe composé de : laser, source d'infrarouge, source d'ultrasons, source de champ magnétique, source de microonde, source de plasma, et source de gazage.

12. Procédé selon l'une quelconque des revendications précédentes, **caractérisé en ce**
**que** dans l'étape de procédé (c) le pressage du revêtement (16) est effectué par un rouleau chauffé (62).

13. Procédé selon l'une quelconque des revendications précédentes, **caractérisé en ce**
**que** dans l'étape de procédé (c) le revêtement (14) présente un grammage de moins de 25 grammes par mètre carré de surface d'arête.
